# EUROPEAN PATENT SPECIFICATION

(11) **EP 4 033 121 B1**
(45) Date of publication and mention of the grant of the patent: **21.10.2026**
(21) Application number: 20866515.8
(22) Date of filing: 03.09.2020
(51) Int. Cl.: F16H 1/28, F16H 57/023

(54) **PLANETARY GEAR TRANSMISSION BOX**
GETRIEBE MIT PLANETENGETRIEBE
BOÎTE DE TRANSMISSION À TRAIN PLANÉTAIRE

(30) Priority: 19.09.2019 CN 201910889607
(43) Date of publication of application: 27.07.2022
(73) Proprietor: Guangdong Zhaoqing L & V Co., Ltd., Zhaoqing, Guangdong 526238 (CN)
(72) Inventor: GONG, Hongyu, Zhaoqing, Guangdong 526238 (CN); JIANG, Yuan, Zhaoqing, Guangdong 526238 (CN); QIU, Xianghuai, Zhaoqing, Guangdong 526238 (CN); YANG, Qingchun, Zhaoqing, Guangdong 526238 (CN)
(74) Representative: Kraus & Lederer PartGmbB
(86) International application number: PCT/CN2020/113242
(87) International publication number: WO 2021/052186

(56) References cited:
- CN-A- 107 830 121
- CN-A- 108 591 385
- CN-A- 110 486 424
- CN-U- 202 073 987
- CN-U- 206 626 165
- DE-C1- 19 711 423
- JP-A- 2019 049 325
- KR-A- 20180 125 361
- KR-A- 20180 125 361
- US-A- 5 429 558
- US-A1- 2015 024 898

## Description

### Technical Field

The present invention relates to the technical field of transmission, more particularly to a planetary gear transmission box.

### Background Art

As automobiles develop continuously toward intelligence and comfort, electric tailgates have become a trend, and more and more cars have begun to use electric tailgates. Generally, the motor drives the gearbox and then drives the tailgate to open or close.

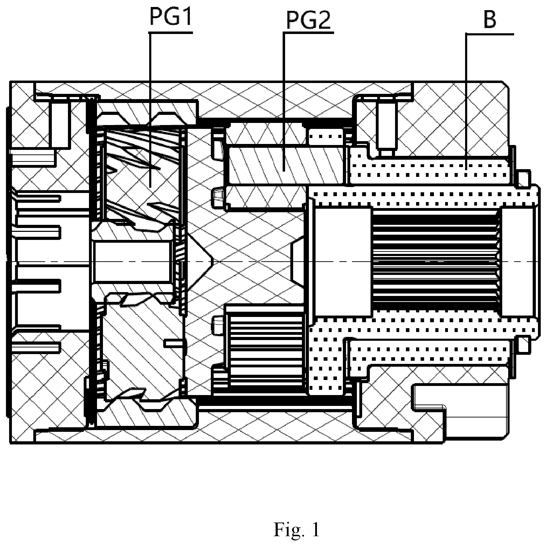

Fig. 1 is an existing gearbox structure for an electric tailgate. The gearbox has a first-stage planetary gear train PG1 and a second-stage planetary gear train PG2. Each stage of planetary gear train consists of a sun gear, a ring gear and a planet carrier. The power is input by the sun gear of the first-stage planetary gear train PG1, output to the second-stage planetary gear train PG2 via the planetary carrier, and then output by the planet carrier of the second-stage planetary gear train PG2. The planet carrier of the second-stage planetary gear train PG2 is supported on a bearing B.

This type of gearbox is designed with a low transmission ratio, usually lower than 25, so it transmits a low torque, and the output torque is generally less than 5Nm. Since it transmits a small torque and has low requirements for the strength of the sun gear, the sun gear of at least one stage of planetary gear train can be produced from plastic. In addition, since this type of gearbox has a low transmission ratio, symmetrical gearboxes are usually used. Documents showing prior art gearboxes are DE 197 11 423 C1, CN 202 073 987 U. Document JP2019 049325 A shows another gearbox of the prior art, on which the two part form of claim 1 is based.

Therefore, this type of gearbox has the defects of low torque transmission and high cost. In addition, since two gearboxes have to be arranged, a large space will be occupied.

### Summary of the Invention

To solve the above technical problem to a certain extent, the present invention proposes the following technical solution:
A planetary gear transmission according to claim 1. Preferred embodiments are laid down in the dependent claims.

### Brief Description of the Drawings

Other specific features and advantages will be clearly shown in the following description in conjunction with the accompanying drawings, and the description is given as a rough rather than limiting guide, in which
Fig. 1 is a structural diagram of a gearbox in the prior art.
Fig. 2 is a structural diagram of a gearbox according to the present invention.
Fig. 3 is an exploded view of components of the gearbox according to the present invention.

All the drawings are only schematic and are not necessarily drawn to scale. In addition, only those parts necessary to illustrate the invention are shown, and other parts are omitted or only mentioned. That is, in addition to the components shown in the drawings, the invention may also include other components.

### Detailed Description of the Embodiments

The technical solution of the present invention is described in detail below in conjunction with the accompanying drawings.

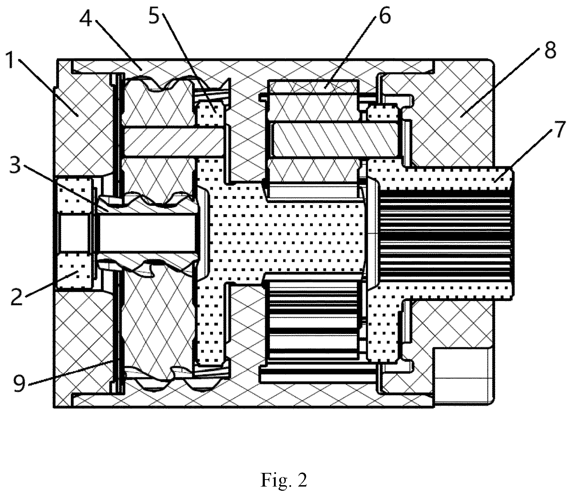

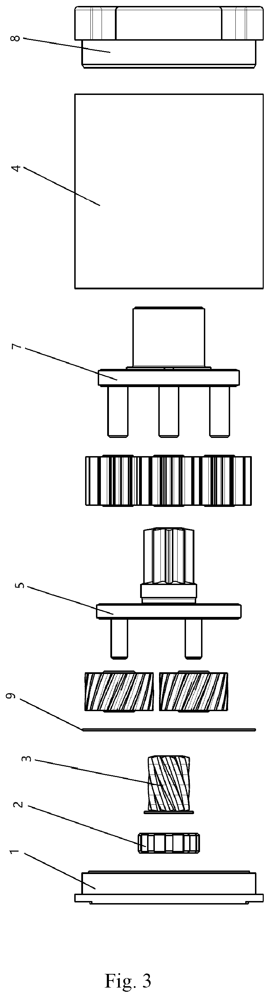

Referring to Figs. 2 and 3, the housing portion of the gearbox in the present invention includes a first end cover 1 on the left side, a second end cover 8 on the right side, and a gearbox intermediate housing 4. The first end cover 1 and the second end cover 8 close the gearbox intermediate housing 4 from both sides respectively, and the transmission components are arranged in the closed space.

The transmission components include two-stage transmission devices. Specifically, the first transmission stage is composed of a first sun gear 3, a first planetary carrier 5, and a first ring gear formed on the inner side of the gearbox intermediate housing 4. The power input by the electric motor is transmitted to the first sun gear 3, then to the first planetary carrier 5 via the planetary gear, and then to the second transmission stage.

The second transmission stage includes a second sun gear, a second ring gear 6 and a second planetary carrier 7. The second ring gear 6 is fixedly arranged on the gearbox intermediate housing 4. As can be seen from Fig. 2, the first planetary carrier 5 and the second sun gear are configured to be one piece. Of course, this is only an exemplary embodiment; the first planetary carrier 5 and the second sun gear may not be integrated as one piece, but made of separate parts respectively. The power is finally output by the second planetary carrier 7.

As can be seen from Fig. 2, a bearing 2 is arranged in the central through hole of the first end cover 1 to support the input shaft. No bearing is arranged in the central through hole of the second end cover 8, and the second planetary carrier 7 is directly supported in the through hole. Compared with the existing transmission box, the transmission box of the present invention has a higher transmission ratio (up to 30 at most), resulting in a lower output rotation speed of the second planetary carrier 7. Due to the lower rotation speed, the wear between the second planetary carrier 7 and the second end cap 2 is relatively reduced. In this way, the bearing is not provided, which reduces the cost.

In addition, as a preferred embodiment, lubricating oil is arranged between the second planetary carrier 7 and the second end cover 8 to further reduce the wear therebetween.

It can also be seen from Figs. 2 and 3 that a gasket 9 is arranged between the first end cover 1 and the planetary gear disposed on the first planetary carrier 5 to reduce friction.

According to the invention, referring to Fig. 2, the gearbox intermediate housing 4 of the present invention is provided with a radially and inwardly extending support portion to support the first planetary carrier 5. The support structure enables the operation of the first planetary carrier 5 to be more stable, which reduces the operating noise of the gearbox.

The present invention redesigns the transmission ratio of the gearbox, making it greater than or equal to 25, preferably between 25-30, so as to increase the locked rotor torque of the gearbox, thus making it greater than 5.5 Nm. Accordingly, due to the increase of the torque, in order to increase the strength of structural members, the second sun gear is made of metal materials. Of course, the first sun gear, the first planetary carrier and the second planetary carrier can also be made of metal materials. In addition, the output rotation speed decreases due to the increase of the transmission ratio, so the bearing member can be omitted at the output end.

The present invention has been clearly and completely described with reference to the above schematic embodiments. Those skilled in the art should understand that various other embodiments can be envisaged by modifying the disclosed technical solution without departing from the scope of the present invention, as defined by its claims.

## Claims

1. A planetary gear transmission box, comprising
a housing portion (1, 4, 8),
a first planetary gear transmission stage (3, 5), and
a second planetary gear transmission stage (6, 7),
wherein the first planetary gear transmission stage (3, 5) comprises
a first sun gear (3),
a first planetary carrier (5), and
a first ring gear,
wherein the second planetary gear transmission stage (6, 7) comprises
a second sun gear,
a second planetary carrier (7), and
a second ring gear (6), and
wherein the first sun gear (3) is connected to an external input element, the first planetary carrier (5) is connected to the second sun gear, and the second planetary carrier (7) is connected to an output element,
wherein the second planetary carrier (7) is directly supported on the housing portion (1, 4, 8),
**characterized in that**
the housing portion (1, 4, 8) comprises an intermediate housing (4) provided with a radially and inwardly extending support portion, and the first planetary carrier (5) is supported by the support portion.

2. The planetary gear transmission box according to claim 1, **characterized in that** an transmission ratio of the planetary gear transmission box is greater than 25.

3. The planetary gear transmission box according to claim 1 or claim 2, **characterized in that** a material of the second sun gear is metal.

4. The planetary gear transmission box according to any one of claims 1-3, **characterized in that** the housing portion (1, 4, 8) comprises a first end cover (1) and a second end cover (8).

5. The planetary gear transmission box according to claim 4, **characterized in that** a bearing (2) is provided in a central through hole of the first end cover (1).

6. The planetary gear transmission box according to claim 4 or claim 5, **characterized in that** a gasket (9) is provided between the first end cover (1) and a planetary gear disposed on the first planetary carrier (5).

## Patentansprüche

1. Planetengetriebe, umfassend
einen Gehäuseabschnitt (1, 4, 8),
eine erste Planetengetriebestufe (3, 5) und
eine zweite Planetengetriebestufe (6, 7),
wobei die erste Planetengetriebestufe (3, 5) Folgendes umfasst:
ein erstes Sonnenrad (3),
einen ersten Planetenträger (5) und
ein erstes Hohlrad,
wobei die zweite Planetengetriebestufe (6, 7) umfasst
ein zweites Sonnenrad,
einen zweiten Planetenträger (7) und
ein zweites Hohlrad (6), und
wobei das erste Sonnenrad (3) mit einem externen Eingangsglied verbunden ist, der erste Planetenträger (5) mit dem zweiten Sonnenrad verbunden ist und der zweite Planetenträger (7) mit einem Ausgangsglied verbunden ist,
wobei der zweite Planetenträger (7) direkt am Gehäuseabschnitt (1, 4, 8) gelagert ist, **dadurch gekennzeichnet, dass**
der Gehäuseabschnitt (1, 4, 8) ein Zwischengehäuse (4) umfasst, das mit einem sich radial und nach innen erstreckenden Stützabschnitt bereitgestellt ist, und der erste Planetenträger (5) durch den Stützabschnitt gelagert ist.

2. Planetengetriebe nach Anspruch 1, **dadurch gekennzeichnet, dass** das Übersetzungsverhältnis des Planetengetriebes größer als 25 ist.

3. Planetengetriebe nach Anspruch 1 oder Anspruch 2, **dadurch gekennzeichnet, dass** das Material des zweiten Sonnenrads Metall ist.

4. Planetengetriebe nach einem der Ansprüche 1-3, **dadurch gekennzeichnet, dass** der Gehäuseabschnitt (1, 4, 8) eine erste Endabdeckung (1) und eine zweite Endabdeckung (8) umfasst.

5. Planetengetriebe nach Anspruch 4, **dadurch gekennzeichnet, dass** in einer zentralen Durchgangsbohrung der ersten Endabdeckung (1) ein Lager (2) bereitgestellt ist.

6. Planetengetriebe nach Anspruch 4 oder Anspruch 5, **dadurch gekennzeichnet, dass** zwischen der ersten Endabdeckung (1) und einem auf dem ersten Planetenträger (5) angeordneten Planetenrad eine Dichtung (9) bereitgestellt ist.

## Revendications

1. Boîte de transmission à train planétaire, comprenant
une partie carter (1, 4, 8),
un premier étage de transmission à train planétaire (3, 5), et
un second étage de transmission à train planétaire (6, 7),
dans laquelle le premier étage de transmission à train planétaire (3, 5) comprend
une première roue solaire (3),
un premier porte-satellites (5), et
une première couronne dentée,
dans laquelle le second étage de transmission à train planétaire (6, 7) comprend une seconde roue solaire,
un second porte-satellites (7), et
une seconde couronne dentée (6), et
dans laquelle la première roue solaire (3) est reliée à un élément d'entrée externe, le premier porte-satellites (5) est relié à la seconde roue solaire, et le second porte-satellites (7) est relié à un élément de sortie,
dans laquelle le second porte-satellites (7) est directement porté sur la partie carter (1, 4, 8),
**caractérisée en ce que**
la partie carter (1, 4, 8) comprend un carter intermédiaire (4) muni d'une partie de support s'étendant radialement et vers l'intérieur, et le premier porte-satellites (5) est porté par la partie de support.

2. Boîte de transmission à train planétaire selon la revendication 1, **caractérisée en ce qu'**un rapport de transmission de la boîte de transmission à train planétaire est supérieur à 25.

3. Boîte de transmission à train planétaire selon la revendication 1 ou la revendication 2, **caractérisée en ce qu'**un matériau de la seconde roue solaire est un métal.

4. Boîte de transmission à train planétaire selon l'une quelconque des revendications 1 à 3, **caractérisée en ce que** la partie carter (1, 4, 8) comprend un premier couvercle d'extrémité (1) et un second couvercle d'extrémité (8).

5. Boîte de transmission à train planétaire selon la revendication 4, **caractérisée en ce qu'**un palier (2) est ménagé dans un trou traversant central du premier couvercle d'extrémité (1).

6. Boîte de transmission à train planétaire selon la revendication 4 ou la revendication 5, **caractérisée en ce qu'**un joint d'étanchéité (9) est ménagé entre le premier couvercle d'extrémité (1) et un satellite disposé sur le premier porte-satellites (5).
